# EUROPÄISCHE PATENTANMELDUNG

(11) **EP 1 033 227 A2**
(43) Veröffentlichungstag der Anmeldung: **06.09.2000**
(21) Anmeldenummer: 99126108.2
(22) Anmeldetag: 29.12.1999
(51) Int. Cl.: B29C 49/42, B29C 49/04

(54) **Mehrfachkavitäten-Blasformmaschine zum Herstellen hohlkörperförmiger Artikel**

(30) Priorität: 01.03.1999 DE 19908723
(71) Anmelder: Fischer-W. Müller Blasformtechnik GmbH, 53842 Troisdorf (DE)
(72) Erfinder: Woop, Heiko, 53754 St. Augustin (DE)
(74) Vertreter: Valentin, Ekkehard, Dipl.-Ing.

(57) **Zusammenfassung**

Bei einer Mehrfachkavitäten-Blasformmaschine zum Herstellen von flaschen-, dosen- oder tubenförmigen Hohlkörpern aus thermoplastischem Kunststoff, mit einer Extrusions- bzw. Kopfstation, in der in geöffnetem Zustand der die Artikelkavitäten bzw. Formnester aufweisenden Formhälften einer Blasform die Schläuche für die Kunststoff-Rohlinge zugeführt werden, wobei mindestens ein in der Nähe der Schläuche mit hoher angelegter Spannung angeordneter Ionisationsstab die beim Extrudieren der Schläuche auftretenden elektrostatischen Ladungen neutralisiert und einer Blas- bzw. Kalibrierstation, in die danach die geschlossenen Formhälften verfahren sowie die Rohlinge mittels in die geschlossene Form einführbaren Blasdornen durch Einpressen von Druckluft in ihre den Artikelkavitäten entsprechende Gestalt gebracht werden, worauf die Blasform geöffnet und nach der Entnahme der geschlossenen und kalibrierten Hohlkörper, die von dort einer Nachbearbeitung zugeleitet werden, zur erneuten Beschickung mit Schlauchabschnitten der extrudierten Materialschläuche zur Extrusionsstation zurücktransportiert wird, wird das Zuführen der Vorformlingsschläuche in die Artikelkavitäten der Blasform verbessert, wenn der Ionisationsstab als eine einzige lange Elektrode in Form eines in einem isolierten Halter angeordneten, elektrisch leitfähigen Bandes ausgebildet ist, das sich über die gesamte Länge der im Abstand nebeneinanderliegend extrudierten Vorformlingsschläuche erstreckt und diesen mit seiner längsseitigen Stirnkante zugewandt ist.

## Beschreibung

Die Erfindung betrifft eine Mehrfachkavitäten-Blasformmaschine zum Herstellen von flaschen-, dosen- oder tubenförmigen Hohlkörpern aus Kunststoff, mit einer Extrusions- bzw. Kopfstation, in der in geöffnetem Zustand der die Artikelkavitäten bzw. Formnester aufweisenden Formhälften einer Blasform die Schläuche für die Kunststoff-Rohlinge zugeführt werden, wobei mindestens ein in der Nähe der Schläuche mit hoher angelegter Spannung angeordneter Ionisationsstab die beim Extrudieren der Schläuche auftretenden elektrostatischen Ladungen neutralisiert, und einer Blas- bzw. Kalibrierstation, in die danach die geschlossenen Formhälften verfahren sowie die Rohlinge mittels in die geschlossene Form einführbaren Blasdomen durch Einpressen von Druckluft in ihre den Artikelkavitäten entsprechende Gestalt gebracht werden, worauf die Blasform geöffnet und nach der Entnahme der geschlossenen und kalibrierten Hohlkörper, die von dort einer Nachbearbeitung zugeleitet werden, zur erneuten Beschickung mit Schlauchabschnitten der extrudierten Materialschläuche zur Extrusionsstation zurücktransportiert wird.

Derartige, allerdings ohne Ionisationsgerät ausgebildete Mehrfach- bzw. Langhub-Blasformmaschinen sind beispielsweise durch die EP 0 570 393 B1 und den Prospekt "Langhub-Blasformmaschinen" von Fischer-W. Müller Blasformtechnik, Januar 1996, bekanntgeworden. Bei diesen Blasformmaschinen sind die Extrusions- bzw. Kopfstation und die Blas- bzw. Kalibrierstation entlang einer vertikalen Längsmittelebene, d.h. auf einer Linie aneinandergereiht angeordnet, entlang welcher die Blasform mit den Formhälften zwischen ihrer Blas- bzw. Kalibrierstation und der Kopfstation zur Beschickung mit den Kunststoff-Schlauchabschnitten hin- und herverfahrbar ist.

Bei Extrusionsblasformanlagen kommt es häufig vor, daß sich die extrudierten Vorformlinge bzw. Vorformlingsschläuche statisch aufladen. Als Folge hiervon fangen die Schläuche an zu pendeln, was dann bewirkt, daß sich die Schläuche nicht mehr reproduzierbar in die Blasform bzw. die Artikelkavitäten einbringen lassen und der Artikel eine schlechte Wanddickenverteilung hat. Da sich die Elektrostatik, die ihre Ursache in einer Ladungstrennung zweier Stoffe findet, deren einer ein Isolator ist, nicht vermeiden läßt, wurde zur Abhilfe der vorgenannten Nachteile in der Nähe der extrudierten Schläuche ein Ionisationsgerät bzw. -stab installiert, das bzw. der eine hohe Ausgangsspannung von ca. 7 kV und eine sehr geringe Stromstärke von ca. 0,25 mA liefert. Durch die hohe Spannung wird die Umgebungsluft elektrisch aufgeladen, um die statische Aufladung zu neutralisieren. Ein handelsüblicher Ionisationsstab besitzt zur gleichmäßigen Verteilung der hohen Spannung symmetrisch angeordnete, nur sehr kleine, zylindrische Elektroden mit einem Durchmesser von ca. 1 mm, die in einem isolierenden Material eines Halters so eingesetzt sind, daß die Elektrode nur ca. 2 bis 4 mm vorsteht. Mit diesen bei Blasformmaschinen im Abstand der aus dem Schlauchkopf extrudierten Vorformlingsschläuche angeordneten einzelnen Elektroden wird die zur Abhilfe bei der Elektrostatik seit langem bekannte Theorie verfolgt, daß sich mit an Spitzen angelegte Hochspannung die elektrische Energie entlädt, wobei die Spitzen positive und negative Ladungsträger emittieren, die an Luftmoleküle angelagert werden. Die einzelnen drahtförmigen Elektroden des bekannten Ionisationsstabes stellen diese Spitzen dar, die dafür sorgen sollen, daß der aufgeladene Körper an Ladung verliert. In der Praxis hat sich allerdings herausgestellt, daß diese Ionisationsstäbe nicht ausreichen. Das deshalb zur Unterstützung außerdem vorgesehene Anblasen mit Luft bringt den Nachteil einer einseitigen Kühlung der Schläuche mit sich.

Der Erfindung liegt daher die Aufgabe zugrunde, bei einer Blasformmaschine der eingangs genannten Art das Zuführen der Vorformlingaschläuche in die Artikelkavitäten der Blasform zu verbessern.

Diese Aufgabe wird erfindungsgemäß dadurch gelöst, daß der Ionisationsstab als eine einzige lange Elektrode in Form eines in einem isolierten Halter angeordneten, elektrisch leitfähigen Bandes, vorzugsweise als Kupferlaminatband, ausgebildet ist, das sich über die gesamte Länge der im Abstand nebeneinanderliegend extrudierten Vorformlingsschläuche erstreckt und diesen mit seiner längsseitigen Stirnkante zugewandt ist. Wie sich in zahlreichen Versuchen überraschend herausgestellt hat, bringt die Abwendung von Einzelspitzen, d.h.separaten, voneinander isolierten drahtförmigen Elektroden, und die Verwendung eines geerdeten, großflächigen Bandes die erforderliche gute Entladung mit sich, um die Vorformlingsschläuche mit gezielter Ausrichtung in die Artikelkavitäten der Blasform einbringen zu können. Dies ist auf die durch die größere Oberfläche des elektrisch leitfähigen Bandes erreichte höhere elektrische Feldstärke zurückzuführen. Als Ergebnis stellt sich eine höhere Neutralisation und damit ein sehr viel besserer Wirkungsgrad ein, wobei zudem der Aufbau einfacher und damit preiswerter als der der bekannten Ionisationsstäbe bzw. -geräte ist.

Eine zweckmäßige Ausgestaltung der Erfindung sieht vor, daß die den Schläuchen zugewandte Stirnkante des Bandes mit Zacken ausgebildet ist. Die mit Spitzen gleichzusetzenden Zacken lassen sich fertigungstechnisch einfach herstellen, denn die Form oder die Geometrie der Elektrode, d.h. des Bandes bzw. Kupferlaminatbandes lassen sich ohne viel Aufwand beliebig anpassen und variieren. Ohne die die elektrische Feldstärke erhöhende große Oberfläche des Bandes zu beeinträchtigen, wird damit am Ort des Geschehens unterstützt, daß sich eine hinreichend hohe Feldliniendichte ausbildet.

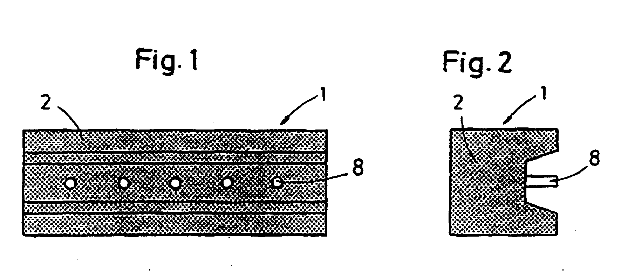

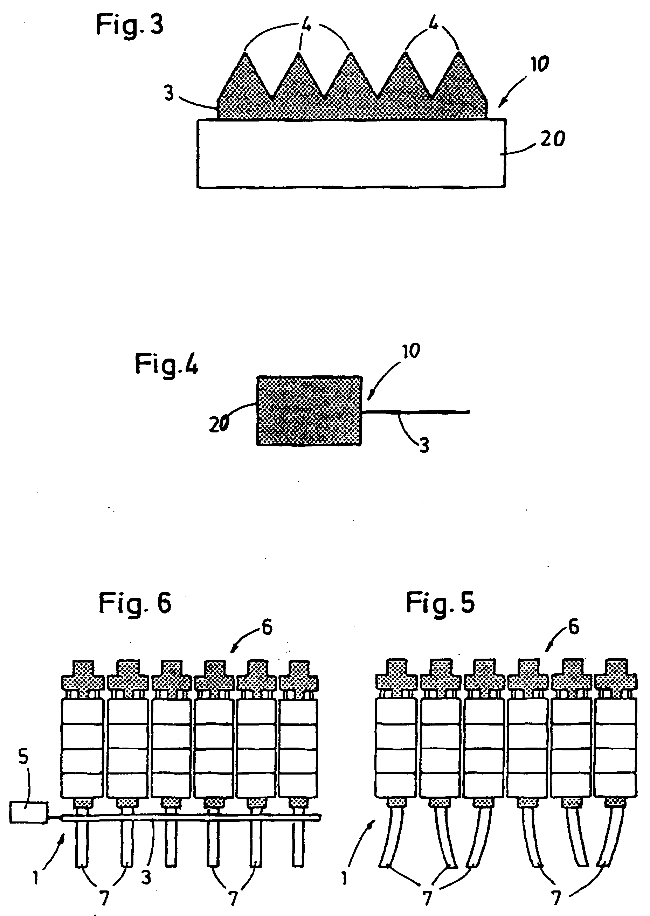

Weitere Einzelheiten und Vorteile der Erfindung ergeben sich aus den Patentansprüchen und der nachfolgenden Beschreibung, in der ein in den Figuren 3 bis 6 schematisch dargestelltes Ausführungsbeispiel des Gegenstandes der Erfindung näher erläutert ist, während die Figuren 1 und 2 den bisherigen Stand der Technik veranschaulichen. Es zeigen:
- Fig. 1: eine Draufsicht auf einen handelsüblichen Ionisationsstab;
- Fig.2: die Seitenansicht des Ionisationsstabes nach Fig 1;
- Fig. 3: eine in einem isolierten Halter angeordnete Band-Elektrode gemäß der Erfindung, in der Draufsicht;
- Fig. 4: eine Seitenansicht der Fig. 3;
- Fig. 5: als Einzelheit einer nicht dargestellten Blasformmaschine deren Schlauchkopf mit extrudierten Vorformlingsschläuchen; und
- Fig. 6: den Schlauchkopf gemäß Fig. 3 mit einem dem Schlauchkopf zugeordneten Ionisationsstab gemäß der Erfindung.

Nach den Fig.1 und Fig.2 besitzt ein handelsüblicher Ionisationsstab zur gleichmäßigen Verteilung der hohen Spannung symetrisch angeordnete, nur sehr kleine, zylindrische Elektroden 8 mit einem Durchmesser von ca. 1 mm, die in einem isolierenden Material eines Halters 2 so eingesetzt sind, daß die Elektrode nur ca. 2 bis 4 mm vorsteht.

Ein in Fig. 3 gezeigter Ionisationsstab 10 gemäß der Erfindung weist einen isolierten Halter 20 auf in den als großflächige, durchgehende Elektrode ein elektrisch leitfähiges Band, vorzugsweise ein Kupferlaminatband 3 eingebettet ist, das an seiner freien längsseitigen Stirnkante mit spitzen Zacken 4 ausgebildet ist und weit nach vorne aus dem Halter 20 vorkragt. Zur aktiven Ionisation wird an das Kupferlaminatband 3 bzw. den Ionisationsstab 10 eine von einer Hochspannungsquelle 5 (vgl. Fig. 6) aufgebrachte Hochspannung angelegt.

In der Gegenüberstellung der Fig. 5 und 6 wird die Wirkung des Ionisationsstabes 10 deutlich. Die Fig. 5 zeigt einen Schlauchkopf 6 - im Ausführungsbeispiel mit sechs Kopfsträngen, deren Anzahl bei im Betrieb befindlichen Blasformmaschinen bis zu 16 Schläuchen betragen kann - einer als solche hinlänglich bekannten Mehrfachkavitäten-Blasformmaschine. Aufgrund der unvermeidlichen statischen Aufladung der extrudierten Vorformlingsschläuche 7 fangen diese an zu pendeln und stimmen in ihrer Ausrichtung nicht mehr mit den Artikelkavitäten der darunter angeordneten Blasform überein, so daß die Vorformlingsschläuche 7 nicht reproduzierbar in der Blasform plaziert werden können und der Fertigartikel eine schlechte Wanddickenverteilung aufweist. Hingegen werden durch den gemäß Fig. 6 dem Schlauchkopf 6 zugeordneten Ionisationsstab 10 die zuvor beschriebenen Nachteile sämtlich vermieden. Dies bewirkt die großflächige Elektrode in Form des Bandes 3 und die damit ereichte hohe elektrische Feldstärke. Die statische Aufladung der Vorformlingsschläuche 7 wird aufgehoben, so daß diese den Schlauchkopf 6 gezielt in Richtung auf die Artikelkavitäten der darunterliegenden Blasform verlassen.

## Patentansprüche

1. Mehrfachkavitäten-Blasformmaschine zum Herstellen von flaschen-, dosen- oder tubenförmigen Hohlkörpern aus thermoplastischem Kunststoff mit einer Extrusions- bzw. Kopfstation, in der in geöffnetem Zustand der die Artikelkavitäten bzw. Formnester aufweisenden Formhälften einer Blasform die Schläuche für die Kunststoffrohlinge zugeführt werden, wobei mindestens ein in der Nähe der Schläuche mit hoher Spannung angeordneter Ionisationsstab die beim Extrudieren der Schläuche auftretenden elektrostatischen Ladungen neutralisiert ,und einer Blas- bzw. Kalibrierstation, in die danach die geschlossenen Formhälften verfahren sowie die Rohlinge mittels in die geschlossene Form einführbaren Blasdornen durch Einpressen von Druckluft in ihren den Artikelkavitäten entsprechende Gestalt gebracht werden, worauf die Blasform geöffnet und nach der Entnahme der geschlossenen und kalibrierten Hohlkörper, die von dort einer Nachbearbeitung zugeleitet werden, zur erneuten Beschickung mit Schlauchabschnitten der extrudierten Materialschläuche zur Extrusionsstation zurücktransportiert wird,
**dadurch gekennzeichnet,**
daß der Ionisationsstab (10) als eine einzige lange Elektrode in Form eines in einem isolierten Halter (20) angeordneten, elektrisch leitfähigen Bandes (3) ausgebildet ist, das sich über die gesamte Länge der im Abstand nebeneinanderliegend extrudierten Vorformlingsschläuche (7) erstreckt und diesen mit seiner längsseitigen Stirnkante zugewandt ist.

2. Blasformmaschine nach Anspruch 1,
**dadurch gekennzeichnet,**
daß die den Vorformlingsschläuchen (7) zugewandte Stirnkante des elektrisch leitfähigen Bandes (3) mit Zacken (4) ausgebildet ist.

3. Blasformmaschine nach Anspruch 1 oder 2,
**dadurch gekennzeichnet,**
daß das elektrisch leitfähige Band (3) ein Kupferlaminatband ist.
